# EUROPÄISCHE PATENTSCHRIFT

(11) **EP 0 567 843 B1**
(45) Veröffentlichungstag und Bekanntmachung des Hinweises auf die Patenterteilung: **24.07.1996**
(21) Anmeldenummer: 93106022.2
(22) Anmeldetag: 14.04.1993
(51) Int. Cl.: B29C 45/06, B29C 45/40, B29C 45/17

(54) **Formschliesseinheit für eine Kunststoff Spritzgiessmaschine**
Mould closing unit for a plastic injection moulding machine
Unité de fermeture de moule pour une machine à mouler par injection les matières plastiques

(30) Priorität: 25.04.1992 DE 4213655; 06.07.1992 DE 4222107
(43) Veröffentlichungstag der Anmeldung: 03.11.1993
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 449 002
- WO-A-92/07706
- DE-A- 2 424 782
- FR-A- 2 115 099
- US-A- 3 993 787

## Beschreibung

Die Erfindung betrifft eine Formschließeinheit für eine Kunststoff-Spritzgießmaschine nach dem Oberbegriff des Anspruches 1.

Aus der DE-A 24 24 782 ist eine gattungsgemäße Vorrichtung bekannt, bei der Gießformteile wechselweise in den Formspannraum geschwenkt werden. Es besteht dabei die Möglichkeit, in die Gießformteile Einlegeteile manuell einzusetzen, die beim anschließenden Spritzvorgang in Kunststoff eingebettet werden. Ein vergleichbarer Mechanismus ist auch aus der US-A 3,993,787 bekannt, bei der Verstärkungsringe automatisch dem Formhohlraum zugeführt werden, die entweder zur Verstärkung der Spritzteile dienen oder in der Spritzgießform zur Verstärkung verbleiben. In beiden Fällen ist nicht beabsichtigt, diese Einsatzteile während weiterer Spritzzyklen im Formspannraum, also an den Teilen der Gießform zu belassen, die nicht mit der Schwinge ausgeschwenkt werden.

Aus der DE-OS 40 08 310 ist eine Vorrichtung bekannt, bei der Gießformteile in die Trennebene hineingeschwenkt werden. Die Gießformteile sind um eine gesonderte Achse schwenkbar, wobei jedes Teil für sich gesondert verschwenkt wird. Insofern ist eine axiale Verschiebung der beiden Teile gegeneinander erforderlich, um ein Teil in die Trennebene innerhalb der Form hineinzubewegen. Zwar können damit die Spritzteile relativ schnell aus der Spritzgießform entnommen werden, jedoch ist für jedes Gießformteil ein gesonderter, die Bewegung ermöglichender Antrieb erforderlich, sodaß sich die Entnahmeposition von Spritzzyklus zu Spritzzyklus ändert. Da jedoch eine Entnahme der Spritzteile durch Berührung des Artikels vermieden werden soll, ist dies dort nicht weiter störend. Der für die Entnahme der Spritzteile aus dem Formhohlraum zu treibende Aufwand wird dabei dadurch erhöht, daß für jedes Gießformteil ein gesonderter Antrieb erforderlich ist.

Ferner ist beispielsweise aus der EP-0 359 013 A2 eine Entnahmeinrichtung für die Entnahme von Spritzlingen aus dem Formhohlraum bekannt. Bei der Entnahme von Spritzlingen mit derartigen Entnahmeeinrichtungen ist es jedoch grundsätzlich erforderlich, daß ein Greifer der Entnahmeeinrichtung zwischen die Formhälften eintaucht, um die Spritzteile aus dem Formhohlraum zu entnehmen. Daher bestimmt sich die Öffnungsweite der Formhälften bei der Entnahme hauptsächlich nach der Größe des einzuführenden Greifers. Je größer jedoch der zur Entnahme der Spritzteile erforderliche Abstand zwischen den Formhälften sein muß, umso mehr Zeit ist auch erforderlich, um die Formhälften auf diesen Abstand zu überführen. Erschwerend kommt hinzu, daß es in der Praxis immer wieder Schwierigkeiten bei der Entnahme von Spritzteilen gibt, wenn beispielsweise der Greifer das Spritzteil nicht sofort richtig greift. Dies führt immer wieder zu Totzeiten, die einer schnellen und störungsfreien Produktion entgegenwirken.

Zum Zwecke des Zweifarb-Spritzgießens ist es zudem bekannt, Gießformteile innerhalb der Spritzgießform um eine quer zur Schließrichtung liegende Achse zu drehen (DE-PS 12 68 365). Dabei kann die Drehbewegung z.B. durch einen Exzenter dahingehend unterstützt werden, daß die Formräume sich jeweils an der gewünschten Stelle befinden. Dies hat jedoch lediglich den Sinn, die Form dem Zweifarb-Spritzgießen zugänglich zu machen, und es ist mit dieser Vorrichtung nicht möglich, Spritzteile aus der Gießform herauszubefördern, zumal eine derartige Anordnung der Schwenkachse quer zur Schließrichtung immer noch einen vollen Öffnungsweg für die Formschließeinheit erforderlich macht.

Ausgehend von diesem Stand der Technik liegt der Erfindung die Aufgabe zugrunde, eine Formschließeinheit der eingangs genannten Gattung derart weiterzubilden, daß selbst bei empfindlichen Spritzteilen durch eine Verkürzung der Produktionszeiten ein schnellerer Ausstoß an Spritzteilen verwirklicht werden kann.

Diese Aufgabe wird durch die Merkmale des Anspruches 1 gelöst.

Bei einer solchen Ausbildung ist auch der schnelle Austausch weiterer Formteile einer Automatisierung zugänglich. Dabei sind Wechselteile der Gießform mit der gleichen Schwinge in die Form zu überführen, die während der Spritzzyklen die Spritzteile aus der Form entnimmt. Da der Spalt zwischen den Formhälften nur geringfügig geöffnet werden muß, kann dieser Wechsel sehr schnell und mit denselben Maschineneinstellparametern durchgeführt werden. Zudem ist es nicht mehr erforderlich, gesonderte Spannmittel vorzusehen, um die Wechselteile in der Form festzuspannen. Die Vorteile dieses Wechsels machen sich insbesondere beim Wechsel von Formplatinen und bei kleinen Stückzahlen in der CD-Herstellung bemerkbar, was die Stückpreise der hergestellten Spritzteile verringert. Dabei kann der Einwechselvorgang vollständig automatisiert werden, da über die Programmsteuerung nur noch zwischen Spritzteil und Wechselteil unterschieden wird, im übrigen aber auf identische Weise ausgewechselt wird.

Bei einer solchen Ausbildung ist das Handling bereits ein Teil des Werkzeuges oder das Werkzeug bereits ein Teil des Handlings. Die Öffnungsposition ist nicht mehr wie bisher dazu erforderlich, einen Greifer zur Entnahme der Teile in den Formspannraum einzuführen, sondern ist lediglich ein Mittel zur Freisetzung des Handlings, um dieses mitsamt dem Spritzteil in eine Position außerhalb des Formspannraums zu verschwenken.

Gleichzeitig ergibt sich ein genauer Ansteuerungspunkt für die Entnahmeeinrichtung beim folgenden Formschluß von selbst, so daß die die Entnahme ermöglichende Schwinge nicht die Lagegenauigkeit und somit kostenaufwendige Präzision bei der Herstellung erfordert wie ein Handling. Falls die Entnahmeeinrichtung nicht sofort das Teil sicher aus dem Gießformteil entnehmen kann, so ist zwischen den Spritzzyklen ausreichend Zeit für einen weiteren Versuch, so daß diesbezüglich weitere Totzeiten vermieden werden. Das Minimalmaß an Öffnungsweg zwischen den Spritzzyklen wird nicht mehr durch den Greifer des Handlings bestimmt, sondern das Spritzteil selbst bestimmt diesen Öffnungsweg, so daß insbesondere bei flachen Spritzteilen die Zykluszeiten dadurch verkürzt werden können, daß geringere Wege zurückgelegt werden müssen.

Bei einer Ausbildung nach Anspruch 2 ist die gesamte Schwinge an der Achse beweglich gelagert. Um die Schwinge für die Drehbewegung freizusetzen, ist sie auf der Achse axial beweglich und radial fixiert abgestützt. Dadurch ergibt sich beim Öffnen der Spritzgießform von selbst ein Loslösen des Gießformteils von den restlichen Formteilen. Letztendlich ist es dabei gleichgültig, ob zunächst ein Loslösen vom stationären oder vom beweglichen Formträger erfolgt, was durch geeignete Maßnahmen wie Hinterschnitte im Formwerkzeug oder Abfederungen am stationären Formträger noch unterstützt werden kann.

Bei einer Ausbildung nach Anspruch 4 ist es möglich, eine derartige Entnahmevorrichtung auch bei minimalstem Platzaufwand zu verwirklichen, wobei gleichzeitig die bereits bestehenden Führungssäulen als Drehachse ausgenützt werden können. Durch den Exzenter ist es möglich, an störenden Kanten problemlos vorbeizufahren. Der Einsatz des Exzenters belastet zwar die Führungssäule asymmetrisch, jedoch wird diese Belastung wieder dadurch verringert, daß lediglich kleine Massen bewegt werden müssen.

Bei einer Ausbildung nach den Ansprüchen 6-8 wird mit Unterdruck der Transport und die Befestigung des Wechselteiles durchgeführt. Die Schwinge übernimmt außerhalb der Gießform das Wechselteil, dann wird das Wechselteil in die Spritzgießform überführt, die Form geschlossen, und während der an der Schwinge aufgebaute Unterdruck abgebaut wird, wird zugleich in der Gießform ein Unterdruck aufgebaut, der für ein vollflächiges Anliegen des Wechselteils in der Gießform sorgt. Zum Entfernen oder Austauschen der Wechselteile erfolgt dieser Vorgang dann in umgekehrter Richtung. Die lagegenaue Festlegung außerhalb der Formschließeinheit erlaubt somit eine lagegenaue Übergabe des Wechselteils an einen Greifer. Kann der Greifer nach Anspruch 8 ein Stapelmagazin für die Wechselteile erreichen, kann einfach und vor allem schnell ein Wechselteil gegen ein neues ausgetauscht werden.

Weitere Vorteile ergeben sich aus den Unteransprüchen. Im folgenden wird die Erfindung anhand der Zeichnungen näher erläutert.
Es zeigen:
- Fig. 1: die Formschließeinheit in einer Seitenansicht, teilweise geschnitten,
- Fig. 2: einen Schnitt durch die Formschließeinheit nach Linie II-II von Fig. 1,
- Fig. 3: einen vergrößerten Ausschnitt des Getriebes in einer Ansicht nach Fig. 2,
- Fig. 4: einen vergrößerten Ausschnitt einer Seitenansicht im Bereich des Getriebes,
- Fig. 5: eine vergrößerte Darstellung der Spritzgießform in geschlossenem Zustand,
- Fig. 6: eine Darstellung gemäß Fig. 5 bei geöffneter Spritzgießform,
- Fig. 7: einen Schnitt durch die geöffnete Formschließeinheit in einer weiteren Ausführungsform in Richtung auf den stationären Formträger.

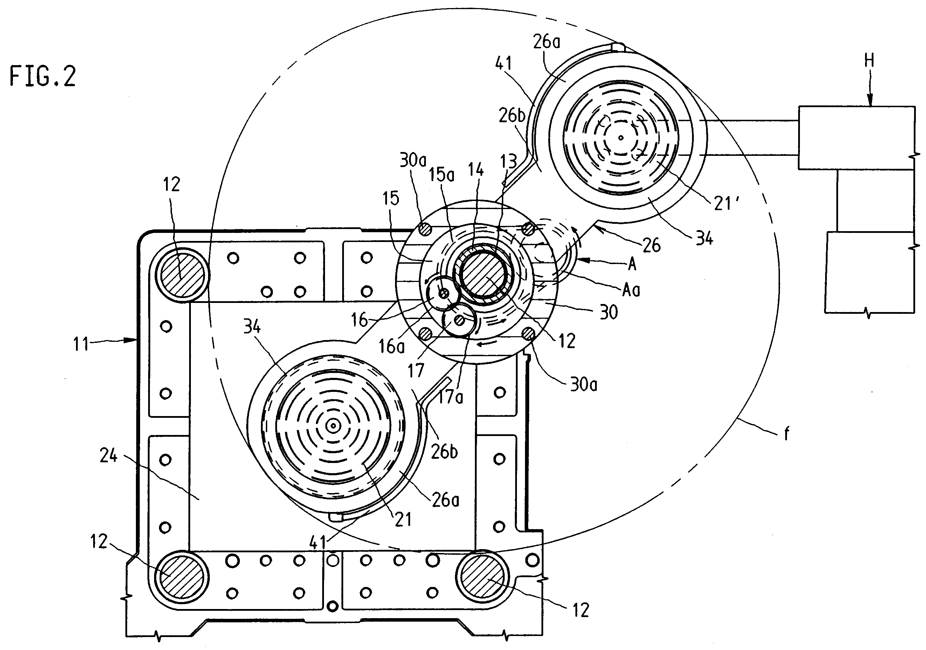

Die Formschließeinheit F wird an einer Kunststoff-Spritzgießmaschine eingesetzt. Grundsätzlich wird dabei durch eine Spritzgießeinheit S Kunststoff in den Formhohlraum eingespritzt, der durch Formteile 24, 25 gebildet wird, die durch Schließzylinder Z in Schließstellung überführt werden können. Die Formteile 24, 25 befinden sich dabei zwischen einem stationären Formträger 10 und einem beweglichen Formträger 11, die über Führungssäulen 12 miteinander verbunden sind, an denen der bewegliche Formträger geführt ist und die sich am stationären Formträger 10 abstützen. Außerdem sind zwei identische Gießformteile 34 vorhanden, die wechselweise zwischen die Formträger 10, 11 der Formschließeinheit F in einer quer zur Schließrichtung s-s verlaufenden Führungsbahn f nahezu in der Trennebene der Formschließeinheit zur Bildung einer Gießform M überführt werden. Die Gießformteile sind dabei mit einer Schwinge 26 zu einer Bewegungseinheit verbunden. Grundsätzlich ist selbstverständlich möglich, auch mehrere Gießformteile zu einer mehrarmigen Schwinge zu verbinden. Wie insbesondere aus Fig. 2 ersichtlich, ist die die Gießformteile 34 umfassende Schwinge 26 um eine quer zur Führungsbahn f liegende Achse a-a drehbar.

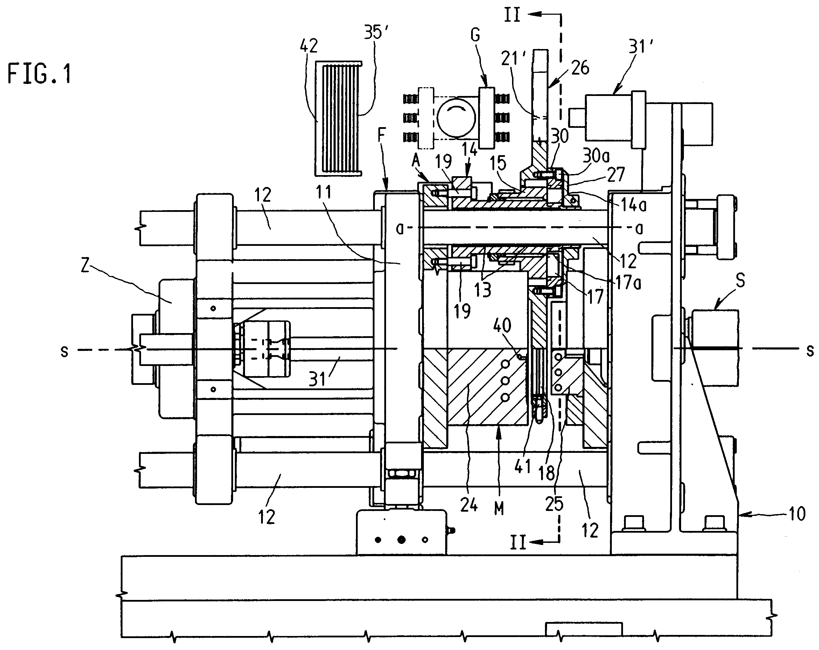

In Fig. 1 ist zu erkennen, daß die nahezu ebenen Gießformteile 34 in nahezu ebenen ringförmigen Halterungen 26a mit Entnahmeöffnungen 18 angeordnet sind. Grundsätzlich müssen die Halterungen und auch die Gießformteile 34 nur so stark ausgebildet sein, daß die Spritzteile 21, 21' bei der Drehbewegung gehalten sind. Beim darauffolgenden Formschluß zentrieren sich die Gießformteile aufgrund ihrer Form selbst in der Gießform und bilden mit den weiteren Formteilen den Formhohlraum 43. Selbstverständlich können andere Spritzteile mit einer Tiefe, die die Stärke der Halterung 26a übersteigt, mit dieser Formschließeinheit hergestellt werden, was lediglich zu einer größeren Öffnungsweite zwischen den einzelnen Spritzzyklen führt.

Da das Gießformteil ein Teil der Spritzgießform ist und es für die Erzeugung optimaler Spritzteile erforderlich ist, daß eine exakte Paßform zwischen den Teilen der mehrteilen Spritzgießform erreicht wird, ergibt sich beim Formschluß von selbst eine exakte Positionierung der Schwinge, die an der Achse a-a gelagert ist. Da aber die exakte Positionierung des im Formspannraum liegenden Gießformteils auch die exakte Positionierung des außerhalb des Formspannraums oder zumindest außerhalb der Gießform M liegenden Spritzteils hervorruft, kann auf einfache Weise eine lagegenaue Position des Spritzteils 21' verwirklicht werden, die insbesondere für den Greifer G eines Handlings H erwünscht ist, ohne daß die Präzisionsanforderungen für die Achslagerung hoch sind.

Die Schwinge 26 ist mit ihrer Nabe an einer Führungssäule 12 drehbar gelagert. Selbstverständlich ist es möglich, auch eine Achse unmittelbar an einem der Formträger anzuordnen, um die eingangs gestellte Aufgabe zu lösen. Die Schwinge 26 wird an der Führungssäule über eine Antriebseinheit A angetrieben. Als Antriebsmittel werden beispielsweise Zahnräder, Zahnstangen oder Riemenantriebe eingesetzt, die vorzugsweise an der Außenseite im Bereich der Nabe die Schwinge antreiben. Insbesondere die Verwendung einer Zahnstange bietet dabei die Möglichkeit, genaue Endlagen anzusteuern, die dann durch die Selbstzentrierung der Gießformteile präzisiert werden können. Auf der Führungssäule 12 ist über Gleitlager 13 eine Lagerbuchse 14 vorgesehen, die die Nabe der Schwinge bildet. Die Lagerbuchse 14 ist über in Richtung der Achse a-a begrenzt bewegliche Abstandsbolzen 19 mit dem beweglichen Formträger 11 verbunden. Genauso besteht jedoch die Möglichkeit, auch eine entsprechende Vorrichtung am stationären Formträger 10 vorzusehen. Die Anordnung am beweglichen Formträger hat den Vorteil, daß automatisch beim Öffnen der Spritzgießform es zu einem Lösen zunächst des Gießformteils vom beweglichen Formträger und dann vom stationären Formträger kommt, was ggf. durch entsprechende Anordnung von Hinterschnitten am Gießformteil oder durch Federmittel unterstützt werden kann. Letztendlich ist es unwesentlich, in welcher Bewegungsabfolge sich die an der Schwinge angeordneten Gießformteile von den Formträgern lösen. Dieses Loslösen kann ggf. noch dadurch unterstützt werden, daß eine Auswerfereinheit 31 zweckentfremdet am Gießformteil angreift, um den durch die Abstandsbolzen 19 vorbestimmten Abstand zwischen Lagerbuchse 14 und Formträger einzustellen. In Fig. 1 ist die losgelöste Stellung unmittelbar vor dem eigentlichen Spritzvorgang dargestellt.

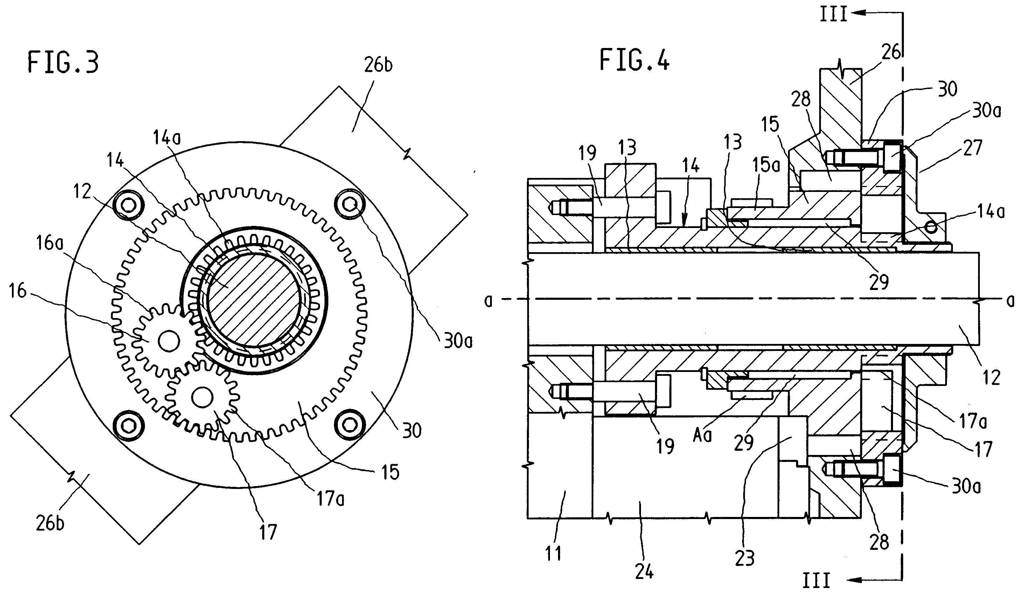

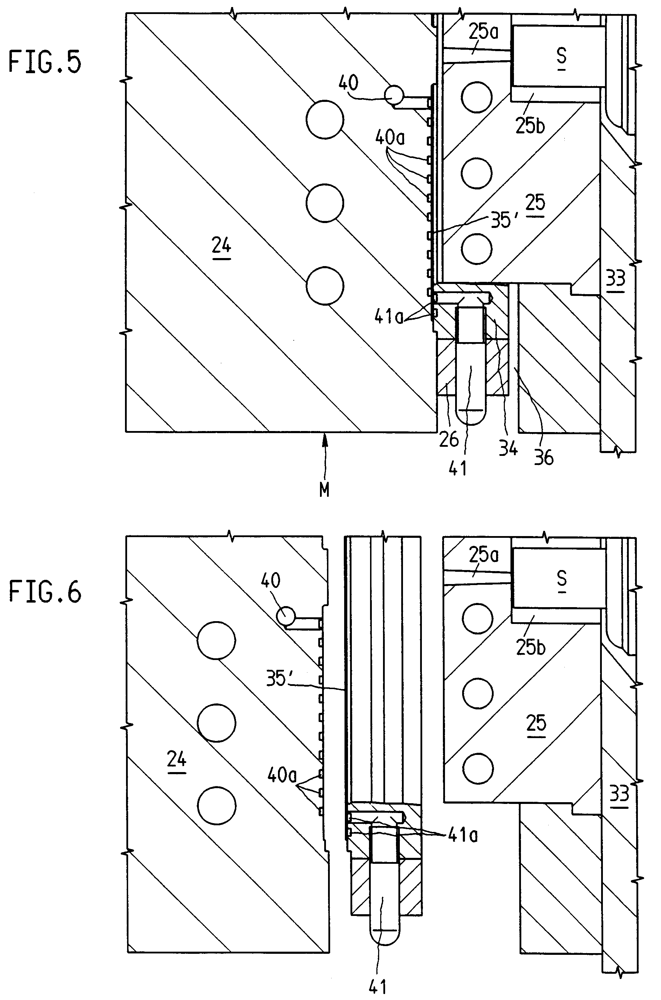

Wie aus Fig. 2 ersichtlich, beschreibt die mit zwei Schwenkarmen 26b versehene Schwinge 26 eine Überführungsbahn f, die ungefähr elliptisch ist. Dies ist erforderlich, um den Formspannraum möglichst klein zu halten und an den Führungssäulen 12 vorbeizukommen. Dieser Nachteil wird angesichts der Kosten, die für einen größeren Formspannraum erforderlich sind, bewußt in Kauf genommen. Um jedoch die elliptische Bewegung zu erreichen, ist es erforderlich, daß die Antriebseinheit einen Exzenter 15 über ein Planetengetriebe antreibt, der mit der Schwinge 26 in Verbindung steht. Das Planetengetriebe wird im folgenden anhand der Fign. 3 und 4 näher beschrieben.

Die Verzahnung Aa der Antriebseinheit steht über einen Zahnriemen mit der Verzahnung 15a des Exzenters 15 in Verbindung. Wird der Exzenter 15 gedreht, so ergibt sich, wie aus den Pfeilen in Fig. 2 ersichtlich, eine entsprechende Bewegung der Schwinge 26. Dies wird dadurch hervorgerufen, daß am Exzenter 15 Planetenräder 16 und 17 gelagert sind, die miteinander verbunden sind. Beim Drehen greift die Verzahnung 16a des Planetenrades 16 in die Verzahnung 14a der stationär auf der Führungssäule 12 gelagerten Lagerbuchse 14 ein. Diese radiale Fixierung erfolgt dabei über die Abstandsbolzen 19. Das andere Planetenrad 17 greift mit seiner Verzahnung 17a in die Verzahnung 30b eines Zahnkranzes ein, der mit der Schwinge 26 in Verbindung steht. Die Teile 14, 15 und 30 sind voneinander durch Lager 28, 29 getrennt. Der Zahnkranz wird in Richtung auf den stationären Formträger 10 noch durch einen Lagerdeckel 27 verschlossen.

Das Verhältnis der Verzahnung des Zahnkranzes 30 zu der Verzahnung 14a der Lagerbuchse 14 ist dabei so gewählt, daß sich ein Verhältnis von 2:1 ergibt, so daß stets identische Positionen von den Gießformteilen 34 eingenommen werden. Wie insbesondere aus Fig. 2 ersichtlich, ist die Verzahnung 15a konzentrisch und der Zahnkranz 30 exzentrisch zur Achse a-a durch die Führungssäule 12 angeordnet. Grundsätzlich erstreckt sich die Führungsbahn dabei lediglich in den Raum hinter der Maschine, so daß der Bedienungsraum vor der Maschine nicht gefährdet wird. Die Teile sind beim Verschwenken bereits spritztechnisch fertig. Bedarfsweise kann jedoch die Schwenkbewegung oder, insbesondere bei Verwendung mehrerer Gießformteile, die Zeit von der Fertigstellung eines Spritzteils bis zur Entnahme eines Spritzteils weiter zur Abkühlung der Spritzteile ausgenutzt werden. Bei der Entnahme kann auch eine weitere Auswerfereinheit 31' behilflich sein.

Außer den Gießformteilen 34 sind auch Wechselteile 35' vorgesehen, die wie Einsatzteile in den Formhohlraum 43 gelangen und beim Formschluß einen Teil des Formhohlraumes begrenzen. Zu diesem Zweck sind sie von der Bewegungseinheit, also der Schwinge 26 trennbar und können während der Spritzteilfertigung mit der Gießform M verbunden bleiben. Während die Wechselteile 35' mit der Gießform M verbunden sind, kann die Bewegungseinheit für den Transport von Spritzteilen 21, 21' eingesetzt werden.

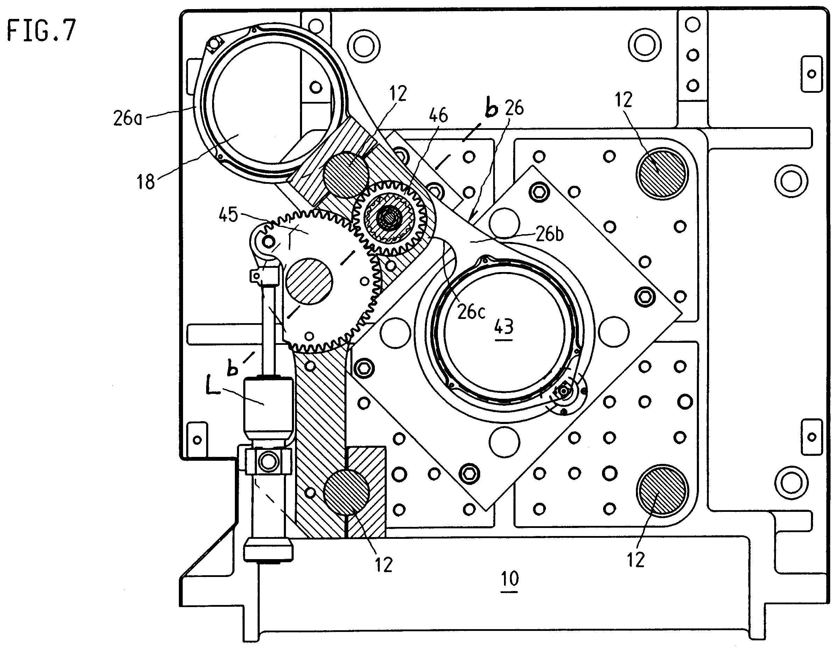

Die Wechselteile werden an Stirnseiten der Gießformteile 34 der Schwinge 26 durch Unterdruck gehalten. Sobald das Wechselteil 35' dann in die Gießform geschwenkt ist, erfolgt der Formschluß, woraufhin der Unterdruck, der das Wechselteil 35' an der Schwinge hält, abgebaut wird und statt dessen ein Unterdruck im Formteil 24 der Spritzgießform aufgebaut wird, wodurch das Wechselteil 35' an das Formteil 24 angesaugt wird. An der Schwinge 26 ist das Wechselteil 35' abdichtend an seinem Umfang gehalten. Wie aus Fig.6 ersichtlich, befinden sich die der Schwinge zugeordneten Vakuumkanäle 41 in einem Bereich, in dem die beiden Formhälften auch bei Formschluß beabstandet sind. Das Wechselteil 35' wird durch die Vakuumkanäle 41a an seinem Umfang gehalten. Die Vakuumkanäle sind in Schließrichtung der Formschließeinheit geöffnet. Dabei enden die Öffnungen der Vakuumkanäle 41a radial weiter außen in einem Bereich, in dem keine Vakuumkanäle 40a vorgesehen sind. Die Vakuumkanäle 40a decken eine Seite des Formhohlraumes nahezu vollständig ab (Fig. 5). Der Unterdruck wird über den Vakuumanschluß 41 erzeugt. Wird nun der Formschluß durchgeführt, so wird das Wechselteil an die Gießform 24 übergeben. Die Vakuumkanäle 40a, die über den Vakuumanschluß 40 unter Vakuum gesetzt werden, sind untereinander durch zeichnerisch nicht dargestellte Querverbindungen verbunden. Solange der Unterdruck an den Vakuumkanälen 40a aufrechterhalten wird, verbleibt das Wechselteil an der Spritzgießform. Erst wenn in Umkehrung der eingangs beschriebenen Reihenfolge das Vakuum in den Vakuumkanälen 41a wieder aufgebaut wird, kann das Wechselteil 35' aus der Spritzgießform ausgewechselt werden.

Alternativ können die Wechselteile am Umfang der Entnahmeöffnungen 18 in Gummilippen gehalten werden, so daß der Transport der Wechselteile zwar mit den gleichen Mitteln, aber unabhängig von dem der Spritzteile erfolgt.

Bei der Herstellung der Spritzteile taucht dann die Spritzgießeinheit S mit ihrer Düse in eine Angußöffnung 25b ein und über einen Angußkanal 25a erfolgt dann die Zufuhr des Materials.

Wie in Fig. 1 dargestellt, wird zur Entnahme der Spritzteile 21, 21' als auch der Wechselteile 35' ein Greifer G eingesetzt. Dabei kann diesem Greifer ein Stapelmagazin 42 zugeordnet sein, so daß die auszuwechselnden Wechselteile 35' unmittelbar durch eine Drehung von beispielsweise 180° in das Stapelmagazin übergeben werden. Als Wechselteile kommen beispielsweise die Tonträgerplatten in der CD-Fertigung infrage.

Figur 7 zeigt ein weiteres Ausführungsbeispiel, das sich vom ersten durch die Anordnung der Drehachse für die Schwinge 26 und die Antriebsart der Schwinge unterscheidet. Zum einen ist die Drehachse mit Gleitlager 13' und Lagerachse 14' jetzt nicht an einer Führungssäule 12 gelagert, wodurch der Platzbedarf minimiert werden kann. Um jedoch trotzdem mit den Führungssäulen nicht zu kollidieren, ist der Schwenkarm symmetrisch zur Ebene b-b ausgebildet und verfügt über Aussparungen 26c, die welchselweise an die Führungssäule angrenzen. Als Antrieb A wird dabei ein Linearantrieb L eingesetzt, dessen Linearbewegung über die Zahnsegmentscheibe 45 und das Zahnrad 46 in Rotation umgesetzt wird. Stattdessen können aber beispielsweise auch Riemenantriebe eingesetzt werden.

## Patentansprüche

1. Formschließeinheit für eine Kunststoff-Spritzgießmaschine mit einer Vorrichtung zum Bewegen von mindestens zwei identischen Gießformteilen (34) an je einem Schwenkarm (26b), wobei die Gießformteile wechselweise in wenigstens eine Trennebene im Formspannraum zwischen die Formträger (10,11) der Formschließeinheit auf einer senkrecht zur Schließrichtung angeordneten Überführungsbahn (f) drehbar um eine parallel zur Schließrichtung (s-s) angeordnete Achse (a-a) zur Bildung einer Gießform mit Formhohlraum (43) überführt werden und mit den Schwenkarmen (26b) eine mehrarmige Schwinge (26) bilden, die die Gießformteile nahezu in der Trennebene der Formschließeinheit überführt, und daß die Schwinge (26) infolge des sie selbst im Formspannraum festlegenden Formschlusses wenigstens ein außerhalb der Gießform (M) liegendes Gießformteil (34) lagegenau in einer von Spritzzyklus zu Spritzzyklus wiederholbaren Position festlegt, aus der zumindest Spritzteile (21') mittels einer Entnahmeeinrichtung (Handling H) entnehmbar sind, wobei Einsatzteile mittels der Gießformteile (34) in den Formhohlraum (43) einbringbar sind, dadurch gekennzeichnet, daß die Einsatzteile als von der Schwinge (26) trennbare Wechselteile (35') ausgebildet sind, die während folgender Spritzzyklen der Spritzteilfertigung mit der Gießform (M) verbunden bleiben, während die Schwinge (26) für den Transport von Spritzteilen (21,21') frei ist.

2. Formschließeinheit nach Anspruch 1, dadurch gekennzeichnet, daß eine als Nabe ausgebildete Lagerbuchse (14) der Schwinge (26) über in Richtung der Achse (a-a) begrenzt bewegliche Abstandsbolzen (19) mit einem Formträger (10,11) verbunden ist.

3. Formschließeinheit nach Anspruch 2, dadurch gekennzeichnet, daß eine Auswerfereinheit (31) vorgesehen ist, die das Lösen der Schwinge (26) vom beweglichen Formträger (11) unterstützt.

4. Formschließeinheit nach einem der vorhergehenden Ansprüche, dadurch gekennzeichnet, daß eine Verzahnung (Aa) einer Antriebseinheit (A) für die Schwinge (26) an der Außenseite eines Exzenters (15) angreift, an dem zwei miteinander kämmende Planetenräder (16, 17) befestigt sind, von denen das eine (16) mit einer Verzahnung (14a) einer stationären Lagerbuchse (14) und das andere (17) mit einer Verzahnung (30b) eines mit der Schwinge (26) verbundenen Zahnkranzes (30) kämmt.

5. Formschließeinheit nach einem der Ansprüche 1 bis 4, dadurch gekennzeichnet, daß die Schwinge (26) symmetrisch zu einer durch die Achse (a-a) gelegten Ebene (b-b) ist und daß an den Schwenkarmen (26b) der Schwinge Aussparungen (26c) für die wechselweise Aufnahme einer Führungssäule (12) vorgesehen sind.

6. Formschließeinheit nach Anspruch 1, dadurch gekennzeichnet, daß jedem Schwenkarm (26b) der Schwinge (26) ein Vakuumanschluß (41) zugeordnet ist, der in Vakuumkanäle (41a) am Umfang der Entnahmeöffnung (18) endet und daß die Wechselteile (35') bei Überführung von und zur Gießform (M) durch Unterdruck in der Schwinge (26) gehalten sind.

7. Formschließeinheit nach Anspruch 6, dadurch gekennzeichnet, daß nach Überführung der Wechselteile (35') zur Gießform (M) der die Wechselteile in der Schwinge (26) haltende Unterdruck abgebaut ist, wenn das Wechselteil durch Unterdruck in der Gießform (M) gehalten ist.

8. Formschließeinheit nach einem der vorhergehenden Ansprüche, dadurch gekennzeichnet, daß ein Greifer (G) der Entnahmeeinrichtung, der auch für die Entnahme der Spritzteile bestimmt ist, die Wechselteile (35') aus einer Entnahmeposition entnimmt und in eine Position zur Übergabe und Entnahme von Wechselteilen (35') an und aus einem Stapelmagazin bewegbar ist.

## Claims

1. Mould closing unit for a plastics material injection moulding machine, having a device for moving at least two identical injection mould parts (34) which are each mounted on a swivel arm (26b), the injection mould parts being transferable alternately into at least one parting plane in the mould clamping chamber between the mould carriers (10, 11) of the mould closing unit on a transfer path (f), which is disposed perpendicular to the closing direction, rotatably about an axis (a-a), which is disposed parallel to the closing direction (s-s), to form an injection mould with a mould cavity (43), and said injection mould parts forming, with the swivel arms (26b), a multi-armed rocker (26) which transfers the injection mould parts substantially in the parting plane of the mould closing unit, and the rocker (26), as a result of the mould closing which sets the rocker itself in the mould clamping chamber, setting at least one injection mould part (34), situated externally of the injection mould (M), accurately in a position which is repeatable from injection cycle to injection cycle, at least mouldings (21') being removable from said position by means of a removal device (handling device H), inserts being insertable into the mould cavity (43) by means of the injection mould parts (34), characterised in that the inserts are configured as exchange parts (35'), which are separable from the rocker (26) and remain connected to the injection mould (M) during subsequent injection cycles of the moulding manufacturing process, while the rocker (26) is free for the transportation of mouldings (21, 21').

2. Mould closing unit according to claim 1, characterised in that a bearing bush (14) of the rocker (26) is configured as a hub and is connected to a mould carrier (10, 11) via spacer pins (19), which are displaceable to a limited extent in the direction of the axis (a-a).

3. Mould closing unit according to claim 2, characterised in that an ejector unit (31) is provided, which assists the release of the rocker (26) from the displaceable mould carrier (11).

4. Mould closing unit according to one of the preceding claims, characterised in that a toothing (Aa) of a drive unit (A) for the rocker (26) co-operates with the external surface of an eccentric (15), on which are mounted two intermeshing planet wheels (16, 17), one of which (16) meshes with a toothing (14a) of a stationary bearing bush (14) and the other (17) meshes with a toothing (30b) of a toothed ring (30) connected to the rocker (26).

5. Mould closing unit according to one of claims 1 to 4, characterised in that the rocker (26) is symmetrical to a plane (b-b) extending through the axis (a-a), and in that recesses (26c) are provided in the swivel arms (26b) of the rocker for alternately accommodating a guide rod (12).

6. Mould closing unit according to claim 1, characterised in that each swivel arm (26b) of the rocker (26) has associated therewith a vacuum connection (41) which terminates in vacuum channels (41a) along the periphery of the removal opening (18), and in that the exchange parts (35') are retained in the rocker (26) by reduced pressure during the transfer from and to the injection mould (M).

7. Mould closing unit according to claim 6, characterised in that, once the exchange parts (35') have been transferred to the injection mould (M), the reduced pressure, which retains the exchange parts in the rocker (26), is gradually removed when the exchange part is retained in the injection mould (M) by reduced pressure.

8. Mould closing unit according to one of the preceding claims, characterised in that a grab (G) of the removal device, which grab is also intended for the removal of the mouldings, removes the exchange parts (35') from a removal position and is displaceable into a position for the transfer and removal of exchange parts (35') to and from a stacked store.

## Revendications

1. Unité de fermeture de moule pour une machine á mouler par injection les matières plastiques avec un mécanisme á mouvoir au moins deux parts de moule identiques (34) par tout bras oscillants (26b), cependant que les parts de moule seront réciproquement transformés au moins dans un plan séparatif dans l'espace de serrage du moule entre les ports-moules (10,11) de l'unité de fermeture de moule disposé réctangulaire á la direction de fermeture sur un voie de transport (f) tournant par une axe (a-a) monté parallelement á la direction de fermeture (s-s) á créer un moule avec cavité du moule (43) et que les bras oscillants (26b) forment une coulisse de plusieurs bras (26), laquelle transfère les parts de moule presque dans le plan séparatif de l'unité de fermeture de moule et que la coulisse (26) en consequence d'être fixé soi-même á la fermeture de forme de moule dans l'espace de serrage du moule détermine au moins un part de moule (34) qui se trouve au dehors de la forme de moule (M) localisé précisément dans une position réitérable d'un cycle de moulage par injection á l'autre par laquelle on peut prendre au moins pièces moulées par injection (21') par un dispositif d'extraction (Handling H) á ce que on peut rentrer des pièces insertées par les parts de moule (34) dans l'cavité du moule (43), caracterisé par le fait que les piéces insertées constituent parts d'échange (35') séparables de la coulisse (26), que pendant les cycles de moulage par injection suivants de la production des pièces moulées par injection restent assemblé avec la forme de moule (M), cependant que la coulisse (26) est libre pour le transport des pièces moulées par injection (21,21').

2. Unité de fermeture de moule selon la revendication 1, caracterisé par le fait qu'un coussinet (14) de la coulisse (26) constitue un moyeu assemblé avec un port-moules (10,11) par boulons d'espace de mobilité limité (19) en direction de l'axe (a-a).

3. Unité de fermeture de moule selon la revendication 2, caracterisé par le fait qu' une unité d'éjection (31) est prevue laquelle support le détachement de la coulisse (26) du port-moule mobile (11).

4. Unité de fermeture de moule selon l'une des revendications précédentes, caracterisé par le fait qu'un engrenage (Aa) d'une unité d'entrainement (A) pour la coulisse (26) engage á l'extérieur d'un excentrique (15) auquel deux roues planétaires (16,17) peignant ensemble sont fixés dont l'un des roues (16) peigne avec un engrenage (14a) d'un coussinet stationnaire (14) et l'autre (17) peigne avec un engrenage (30b) d'une coulisse (26) assemblée avec une couronne dentée (30).

5. Unité de fermeture de moule selon l'une des revendications 1 á 4, caracterisé par le fait que la coulisse (26) est symétrique au plan (b-b) mise á l'axe (a-a) et que évidements (26c) sont prévue aux bras oscillants (26b) de la coulisse pour lesquelles la réception d'une colonne de guidage (12) est prevue réciproquement.

6. Unité de fermeture de moule selon la revendication 1, caracterisé par le fait que tout bras oscillant (26b) de la coulisse (26) est coordonné á un raccordement de vide (41) lequel aboutit dans des conduits de vide (41a) au circuit du trou de prise (18) et que les parts d'échange (35') sont fixés pendant le transport á et de la forme de moule (M) par pression diminuée dans la coulisse (26).

7. Unité de fermeture de moule selon la revendication 6, caracterisé par le fait qu'après le transport des parts d'échange (35') á la forme de moule (M) la pression diminuée laquelle fixe les parts d'échange dans la coulisse (26) est reduite, si le part d'échange par pression diminuée est fixé dans la forme de moule (M).

8. Unité de fermeture de moule selon l'une des revendications précédentes caracterisé par le fait qu'une griffe (G) de la dispositif d'extraction, laquelle est prévue aussi pour l'extraction des pièces moulées par injection, prend les parts d'échange (35') d'une position de prise et qu'il est possible de mouver la griffe dans une position pour la remise et prise des parts d'échange (35') á et d'un magasin de pile.
